# EUROPEAN PATENT SPECIFICATION

(11) **EP 4 085 745 B1**
(45) Date of publication and mention of the grant of the patent: **29.01.2025**
(21) Application number: 22166422.0
(22) Date of filing: 03.04.2022
(51) Int. Cl.: A01D 34/00, G05D 1/00

(54) **IMPROVED NAVIGATION FOR A ROBOTIC WORK TOOL**
VERBESSERTE NAVIGATION FÜR EIN ROBOTISCHES ARBEITSWERKZEUG
NAVIGATION AMÉLIORÉE POUR UN OUTIL DE TRAVAIL ROBOTIQUE

(30) Priority: 03.05.2021 SE 2150560
(43) Date of publication of application: 09.11.2022
(60) Divisional application: 24217134.6
(73) Proprietor: HUSQVARNA AB, 561 82 Huskvarna (SE)
(72) Inventor: ÄRLIG, Ulf, 564 35 BANKERYD (SE); FORSMAN, Pär, 554 47 JÖNKÖPING (SE)

(56) References cited:
- WO-A1-2020/256619
- WO-A1-2021/038287
- US-A1- 2014 379 196

## Description

### TECHNICAL FIELD

This application relates to robotic work tools and in particular to a system and a method for providing an improved servicing, such as exiting a service station for a robotic work tool, such as a lawnmower.

### BACKGROUND

Automated or robotic power tools such as robotic lawnmowers are becoming increasingly more popular. In a typical deployment a work area, such as a garden, the work area is enclosed by a boundary with the purpose of keeping the robotic lawnmower inside the work area. Alternatively or additionally to the boundary wire, many robotic work tools are arranged to operate and navigate using a satellite navigations system, such as GNSS or GPS. The robotic work tool may also or alternatively be arranged to operate or navigate utilizing a beacon-based navigation system, such as UWB, or through combined systems such as RTK.

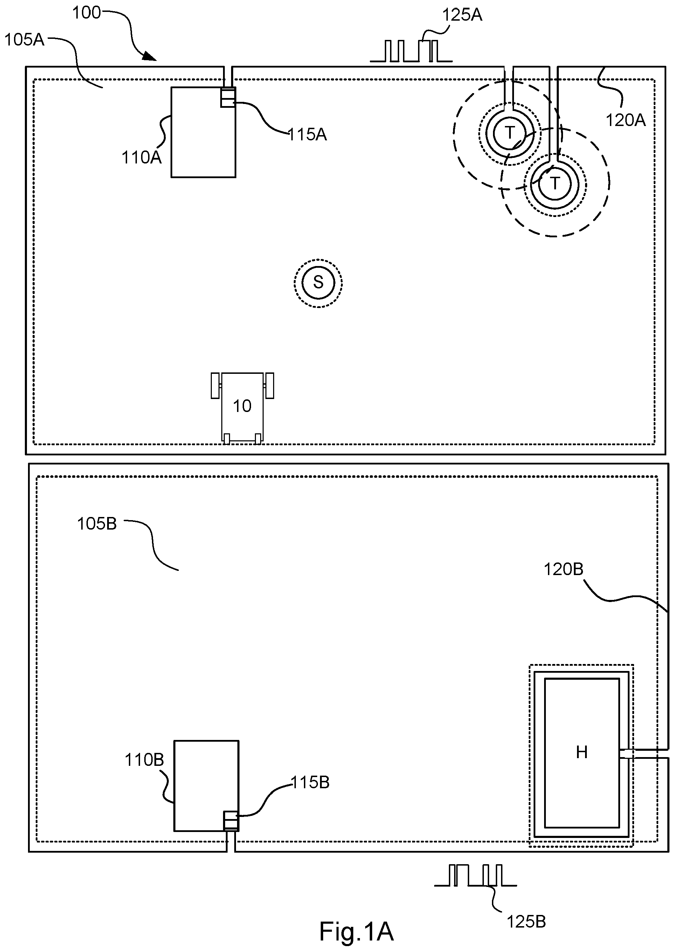

Figure 1A shows a schematic view of an example of a typical work area 105, being a garden, in which a robotic work tool 10, such as a robotic lawnmower, is set to operate.

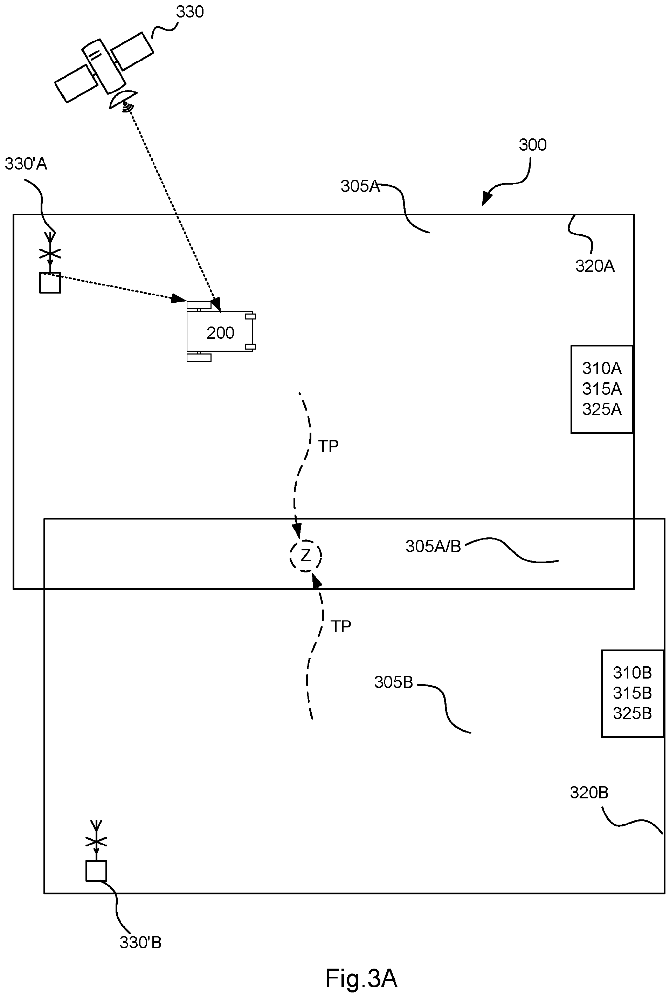

The garden contains a number of obstacles, exemplified herein by a number (2) of trees (T), a stone (S) and a house structure (H). The trees are marked both with respect to their trunks (filled lines) and the extension of their foliage (dashed lines). The garden is enclosed by a boundary wire 120 through which a control signal 125 is transmitted by a signal generator 115 housed in a charging station 110, the control signal 125 generating a magnetic field that can be sensed by the robotic work tool 10. The garden may also comprise or be in the line of sight of at least one signal navigation device such as a beacon(s) or a satellite(s) (not explicitly shown in figure 1A, but shown and referenced 330 in figure 3A).

The use of satellite and/or beacon navigation (as examples of signal navigation) enables for a boundary that is virtual, in addition to or as an alternative to the boundary wire 120. A virtual boundary 120' is indicated in figure 1A by the dotted line. From hereon there will be made no difference between the boundary being defined by the boundary wire 120 or as a virtual boundary 120' and the boundary of the work area 105 will hereafter simply be referred to as the boundary 120, unless otherwise specifically mentioned.

It is widely recognized that since the magnetic boundary is physical it is regarded as being a more sae alternative, and one that does not require any virtual maps to be made of a work area. In many situations a wire-based boundary is therefore preferred.

In the example of figure 1A, there is a further or second work area 105B - as opposed to the first work area 105A. This work area is also bounded by boundary 120B. The second boundary 120B may be provided through a boundary wire, or through a beacon or satellites.

As most beacons have a limited range, and as most boundary-based systems also have a limited size, it is known to enlarge a work area, by using two work area 105A and 105B, the two thus forming a larger work area 105. This also allows for one and the same (set of) robotic work tool(s) to operate in two different work areas.

Therefore a second work area 105B is shown in figure 1A

However, in prior art solutions, there are problems in how the robotic work tool crosses from one area to another. For boundary wire based systems, it is basically only possible to cross if the control signals 125 used in both systems are the same so that the robotic work tool does not sense the crossing. This also requires that the two adjacent work areas are side-by-side.

If not, the robotic work tool will prevent itself from crossing the boundary as is indicated in figure 1A, by the robotic work tool 10 stopping by the boundary 120A.

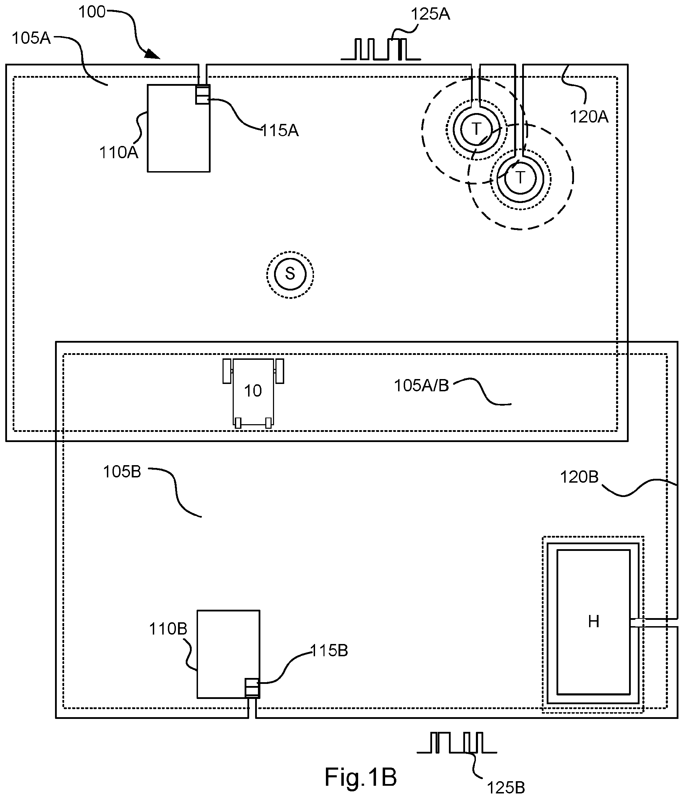

Figure 1B shows a similar situation, but for overlapping work areas, where the overlap is referenced 105A/B. Here, a robotic work tool 10 may even get stuck in the overlapping area 105A/B as it has to cross a boundary wire to get out of it, which it will prevent itself from doing.

The patent document published as WO2020256619A1 discloses a robotic working tool system comprising a signal generator a robotic work tool, the signal generator including a signal pick-up and a controller, the controller being configured to receive information from the signal pick- up sensor, the information indicating an environment; determine a control signal to be used based on the information indicating the environment; cause the selected control signal to be generated and transmitted to the robotic work tool for controlling the operation of the robotic work tool.

Thus, there is a need for an improved manner of enabling a robotic work tool to easily operate in multiple work areas 105.

### SUMMARY

It is therefore an object of the teachings of this application to overcome or at least reduce those problems by providing a robotic work tool system as defined by appended claim 1.

In some embodiments the controller is further configured to travel along a transport path to the crossing zone.

In some embodiments the crossing zone is located in the second work area.

In some embodiments the controller is further configured to travel along a transport path from the crossing zone into the second work area.

In some embodiments the controller is further configured to travel along the transport path from the crossing zone to a second crossing zone in the second work area.

In some embodiments the controller is further configured to operate in a transport mode while travelling along the transport path.

In some embodiments the controller is further configured to determine that the robotic work tool is in the crossing zone based on a position of the robotic work tool and a known location of the crossing zone.

In some embodiments the controller is further configured to determine that the robotic work tool is in the crossing zone based on a sensing of the first boundary and/or the second boundary.

In some embodiments the crossing zone is in range of the beacon.

In some embodiments there is a first crossing zone in the first work area and a second crossing zone in the second work area, wherein the first crossing zone in the first work area is connected to the second crossing zone in the second work area by a transport path.

In some embodiments the robotic work tool further comprises a satellite signal navigation sensor and wherein the controller is configured to travel along the transport path connecting the first crossing zone in the first work area and the second crossing zone in the second work area navigating based on satellite navigation.

In some embodiments the robotic work tool is configured to ignore the second boundary when operating in the first domain mode.

In some embodiments the robotic work tool is configured to ignore the first boundary when operating in the second domain mode.

In some embodiments the robotic work tool is configured for operating in a work area comprising an uneven surface, where objects are of a similar appearance to the surface and/or overhanging obstacles.

In some embodiments the robotic work tool is a robotic lawnmower.

It is also an object of the teachings of this application to overcome the problems by providing a method for use in a robotic work tool system as defined by appended claim 15.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1A shows an example of a robotic work tool system being a robotic lawnmower system;
Figure 1B shows an example of a robotic work tool system being a robotic lawnmower system;
Figure 2A shows an example of a robotic lawnmower according to one embodiment of the teachings herein;
Figure 2B shows a schematic view of the components of an example of a robotic work tool being a robotic lawnmower according to an example embodiment of the teachings herein;
Figure 3A shows a schematic view of a robotic work tool system according to an example embodiment of the teachings herein;
Figure 3B shows a schematic view of a robotic work tool system according to an example embodiment of the teachings herein;
Figure 3C shows a schematic view of a robotic work tool system according to an example embodiment of the teachings herein;
Figure 3D shows a schematic view of a robotic work tool system according to an example embodiment of the teachings herein; and
Figure 4 shows a corresponding flowchart for a method according to an example embodiment of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

It should be noted that even though the description given herein will be focused on robotic lawnmowers, the teachings herein may also be applied to, robotic ball collectors, robotic mine sweepers, robotic farming equipment, or other robotic work tools where a work tool is to be safeguarded against from accidentally extending beyond or too close to the edge of the robotic work tool.

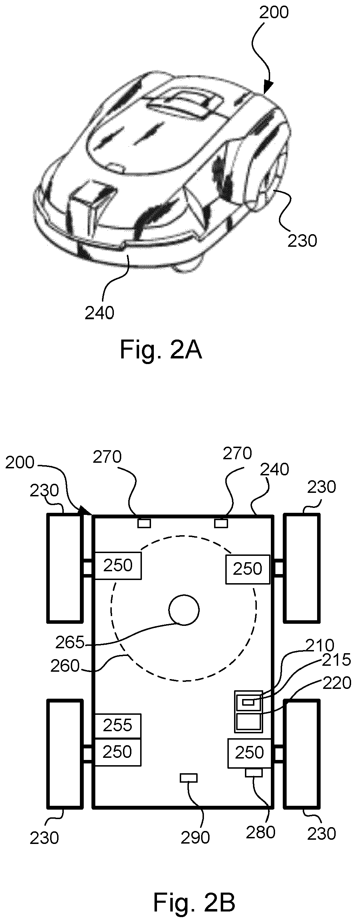

Figure 2A shows a perspective view of a robotic work tool 200, here exemplified by a robotic lawnmower 200, having a body 240 and a plurality of wheels 230 (only one side is shown). The robotic work tool 200 may be a multi-chassis type or a mono-chassis type (as in figure 2A). A multi-chassis type comprises more than one main body parts that are movable with respect to one another. A mono-chassis type comprises only one main body part.

It should be noted that even though the description herein is focussed on the example of a robotic lawnmower, the teachings may equally be applied to other types of robotic work tools, such as robotic floor grinders, robotic floor cleaners to mention a few examples where a work tool should be kept away from the edges for safety or convenience concerns.

It should also be noted that the robotic work tool is a self-propelled robotic work tool, capable of autonomous navigation within a work area, where the robotic work tool propels itself across or around the work area in a pattern (random or predetermined).

Figure 2B shows a schematic overview of the robotic work tool 200, also exemplified here by a robotic lawnmower 200. In this example embodiment the robotic lawnmower 200 is of a mono-chassis type, having a main body part 240. The main body part 240 substantially houses all components of the robotic lawnmower 200. The robotic lawnmower 200 has a plurality of wheels 230. In the exemplary embodiment of figure 2B the robotic lawnmower 200 has four wheels 230, two front wheels and two rear wheels. At least some of the wheels 230 are drivably connected to at least one electric motor 250. It should be noted that even if the description herein is focused on electric motors, combustion engines may alternatively be used, possibly in combination with an electric motor. In the example of figure 2B, each of the wheels 230 is connected to a common or to a respective electric motor 255 for driving the wheels 230 to navigate the robotic lawnmower 200 in different manners. The wheels, the motor 255 and possibly the battery 250 are thus examples of components making up a propulsion device. By controlling the motors 250, the propulsion device may be controlled to propel the robotic lawnmower 200 in a desired manner, and the propulsion device will therefore be seen as synonymous with the motor(s) 250.

The robotic lawnmower 200 also comprises a controller 210 and a computer readable storage medium or memory 220. The controller 210 may be implemented using instructions that enable hardware functionality, for example, by using executable computer program instructions in a general-purpose or special-purpose processor that may be stored on the memory 220 to be executed by such a processor. The controller 210 is configured to read instructions from the memory 220 and execute these instructions to control the operation of the robotic lawnmower 200 including, but not being limited to, the propulsion and navigation of the robotic lawnmower.

The controller 210 in combination with the electric motor 255 and the wheels 230 forms the base of a navigation system (possibly comprising further components) for the robotic lawnmower, enabling it to be self-propelled as discussed under figure 2A,

The controller 210 may be implemented using any suitable, available processor or Programmable Logic Circuit (PLC). The memory 220 may be implemented using any commonly known technology for computer-readable memories such as ROM, RAM, SRAM, DRAM, FLASH, DDR, SDRAM or some other memory technology. The robotic lawnmower 200 may further be arranged with a wireless communication interface 215 for communicating with other devices, such as a server, a personal computer or smartphone, the charging station, and/or other robotic work tools. Examples of such wireless communication devices are Bluetooth^{®}, WiFi^{®} (IEEE802.1 1b), Global System Mobile (GSM) and LTE (Long Term Evolution), to name a few.

The robotic lawnmower 200 also comprises a grass cutting device 260, such as a rotating blade 260 driven by a cutter motor 265. The grass cutting device being an example of a work tool 260 for a robotic work tool 200. As a skilled person would understand the cutter motor 265 is accompanied or supplemented by various other components, such as a drive shaft to enable the driving of the grass cutting device, taken to be understood as included in the cutter motor 265. The cutter motor 265 will therefore be seen as representing a cutting assembly 265 or in the case of another work tool, a work tool assembly 265.

The robotic lawnmower 200 further comprises at least one (signal) navigation sensor, such as an optical navigation sensor, an ultrasound sensor, a beacon navigation sensor and/or a satellite navigation sensor 290. The optical navigation sensor may be a camera-based sensor and/or a laser-based sensor. The beacon navigation sensor may be a Radio Frequency receiver, such as an Ultra Wide Band (UWB) receiver or sensor, configured to receive signals from a Radio Frequency beacon, such as a UWB beacon. Alternatively or additionally, the beacon navigation sensor may be an optical receiver configured to receive signals from an optical beacon. The satellite navigation sensor may be a GPS (Global Positioning System) device or other Global Navigation Satellite System (GNSS) device. In embodiments, where the robotic lawnmower 200 is arranged with a navigation sensor, the magnetic sensors 270 as will be discussed below are optional. In embodiments relying (at least partially) on a navigation sensor, the work area may be specified as a virtual work area in a map application stored in the memory 220 of the robotic lawnmower 200. The virtual work area may be defined by a virtual boundary.

In the examples that will be discussed herein the navigation sensor is a satellite navigation sensor, such as GPS, GNSS or a supplemental satellite navigation sensor such as RTK.

The robotic lawnmower 200 also comprises deduced reckoning sensors 280. The deduced reckoning sensors may be odometers, accelerometer or other deduced reckoning sensors. In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

For enabling the robotic lawnmower 200 to navigate with reference to a boundary wire emitting a magnetic field caused by a control signal transmitted through the boundary wire, the robotic lawnmower 200 is, in some embodiments, further configured to have at least one magnetic field sensor 270 arranged to detect the magnetic field and for detecting the boundary wire and/or for receiving (and possibly also sending) information to/from a signal generator (will be discussed with reference to figure 1). In some embodiments, the sensors 270 may be connected to the controller 210, possibly via filters and an amplifier, and the controller 210 may be configured to process and evaluate any signals received from the sensors 270. The sensor signals are caused by the magnetic field being generated by the control signal being transmitted through the boundary wire. This enables the controller 210 to determine whether the robotic lawnmower 200 is close to or crossing the boundary wire, or inside or outside an area enclosed by the boundary wire.

In some embodiments, the robotic lawnmower 200 is arranged to operate according to a map of the work area 105, 305 (and possibly the surroundings of the work area 105) (referenced 305 in figure 3A and onwards) stored in the memory 220 of the robotic lawnmower 200. The map may be generated or supplemented as the robotic lawnmower 200 operates or otherwise moves around in the work area 105, 305.

Figure 3A shows a robotic work tool system 300 in some embodiments. The schematic view is not to scale. The robotic work tool system 300 of figure 3A, corresponds in many aspects to the robotic work tool system 100 of figure 1A, except that the robotic work tool system 300 of figure 3A comprises a robotic work tool 200 according to the teachings herein. It should be noted that the work area shown in figure 3A is simplified for illustrative purposes but may contain some or all of the features of the work area of figure 1A, and even other and/or further features as will be hinted at below.

As with figures 2A and 2B, the robotic work tool is exemplified by a robotic lawnmower, whereby the robotic work tool system may be a robotic lawnmower system or a system comprising a combinations of robotic work tools, one being a robotic lawnmower, but the teachings herein may also be applied to other robotic work tools adapted to operate within a work area.

The robotic work tool system 300 comprises a first work area 305A and a second work area 305B. In some embodiments, the work areas have a charging station 310 which in some embodiments is arranged with a signal generator (not shown explicitly but seen as part of the charging station and referenced 315) for providing a control signal (not shown explicitly but seen as part of the charging station and referenced 325) through a boundary wire 320.

The robotic work tool system 300 may comprise or be arranged to utilize at least one signal navigation device 330. In the example of figure 3A two options are shown, a first being at least one satellite 330 (only one shown, but it should be clear that a minimum of three are needed for an accurate three 2 dimensional location). The second option being at least one beacon, such as an RTK base station (or beacon) or a UWB beacon 330'A, 330'B (only one shown for each work area).

The work area 305 is in this application exemplified as a garden, but can also be other work areas as would be understood. As hinted at above, the garden may contain a number of obstacles, for example a number of trees, stones, slopes and houses or other structures.

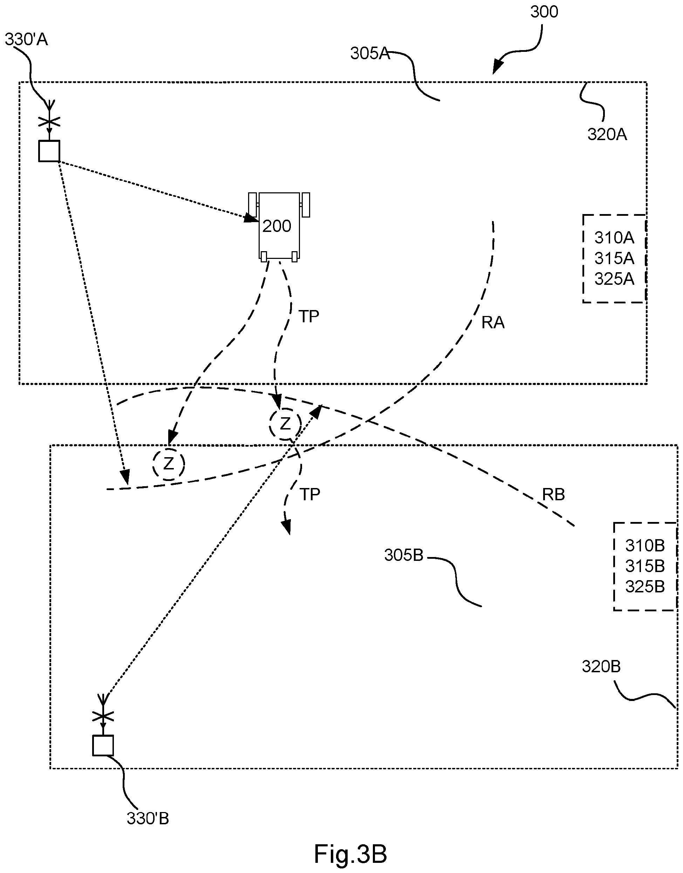

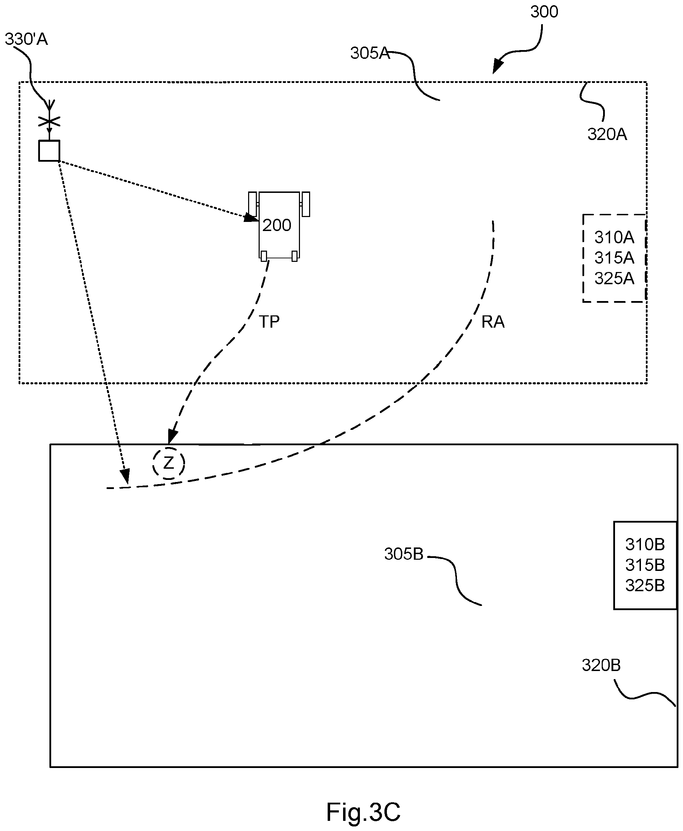

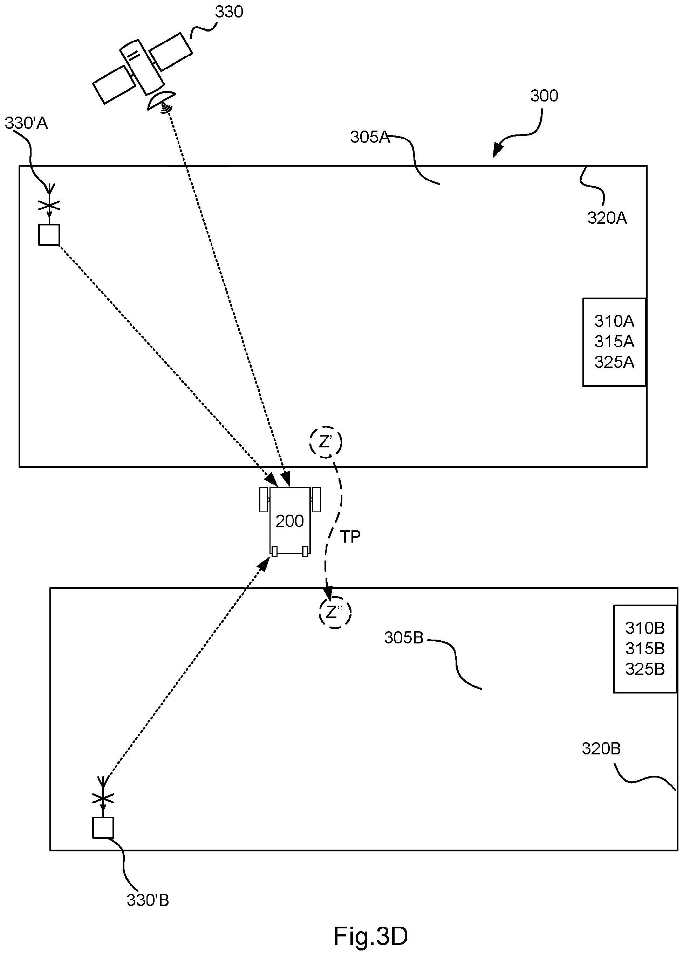

In some embodiments the robotic work tool is arranged or configured to traverse and operate in a work area that is not essentially flat, but contains terrain that is of varying altitude, such as undulating, comprising hills or slopes or such. The ground of such terrain is not flat and it is not straightforward how to determine an angle between a sensor mounted on the robotic work tool and the ground. The robotic work tool is also or alternatively arranged or configured to traverse and operate in a work area that contains obstacles that are not easily discerned from the ground. Examples of such are grass or moss covered rocks, roots or other obstacles that are close to ground and of a similar colour or texture as the ground. The robotic work tool is also or alternatively arranged or configured to traverse and operate in a work area that contains obstacles that are overhanging, i.e. obstacles that may not be detectable from the ground up, such as low hanging branches of trees or bushes. Such a garden is thus not simply a flat lawn to be mowed or similar, but a work area of unpredictable structure and characteristics. The work area 305 exemplified with referenced to figure 3, may thus be such a non-uniform work area as disclosed in this paragraph that the robotic work tool is arranged to traverse and/or operate in.

In the below several embodiments of how the robotic work tool may be adapted will be disclosed.

Returning to the robotic work tool 200 being in the first work area 305A, but also being able to operate in the second work area 305B. The robotic work tool 200, or rather the controller 210 of the robotic work tool 200 is configured to operate in two (or more) domain modes, where each domain mode is associated with a work area. As shown in figure 3A, the controller 210 is thus configured to operate in a first domain mode associated with the first work area 305A, in which first domain mode, the controller is configured to operate according to the first boundary 320A, and in a second domain mode associated with the second work area 305B, in which second domain mode, the controller is configured to operate according to the second boundary 320B. In some embodiments, the robotic work tool 200 is configured to ignore the second boundary 320B when operating in the first domain mode. In some embodiments, the robotic work tool 200 is configured to ignore the first boundary 320A when operating in the second domain mode.

The first boundary 320A is in some embodiments associated with a first control signal 325A, that the controller is thus configured to sense with magnetic sensors 270 and operate according to when in the first domain mode. Alternatively or additionally, the first boundary 320A is in some embodiments associated with a first beacon 330'A, that the controller is thus configured to sense with navigation sensor 290 and operate according to when in the first domain mode.

Likewise, the second boundary 320B is in some embodiments associated with a second control signal 325B, that the controller is thus configured to sense with magnetic sensors 270 and operate according to when in the second domain mode. Alternatively or additionally, the second boundary 320B is in some embodiments associated with a second beacon 330'B, that the controller is thus configured to sense with navigation sensor 290 and operate according to when in the second domain mode.

It should be noted that any combination of how a boundary is defined and how it is sensed is possible and within the scope of this application's teachings.

This enables the robotic work tool to operate freely within the first work area 305A and be undisturbed by the second work area's boundary 320B.

In order to allow the robotic work tool to cross safely between the two work areas 305, the robotic work tool is configured to determine that it is in a crossing zone referenced Z in figure 3A, and as the robotic work tool determines that the robotic work tool is in the crossing zone, the robotic work tool switches from one domain mode to another. For the example of figure 3A, when the robotic work tool 200 is thus in the crossing zone Z, it may switch from the first domain mode to the second domain mode. The first domain mode allowed the robotic work tool to navigate to the crossing zone inside the first work area 305A operating according to the first boundary 305A, and the second domain mode enables the robotic work tool to leave the first work area 305A and continue operating in the second work area 305B according to the second boundary 320B.

The crossing zone Z thus indicates a point or area where it is safe to switch from operating according to one boundary to operating according to another boundary.

In some embodiments, the robotic work tool is configured to store a location of the crossing zone in the memory 220, and to navigate towards the crossing zone, using any known and available navigation technique. In some such embodiments the robotic work tool is thus configured to determine that it is in the crossing zone, based on determining the location of the robotic work tool and comparing it to the location of the crossing zone.

In further some such embodiments, the robotic work tool is configured to navigate towards the crossing zone along a transport path TP. The transport path may be a pre-specified path, or it may be a path that has been travelled previously. IN any case, the transport path is assumed to be safe for the robotic work tool to travel along as regards to avoiding obstacles and/or having a good reception of some boundary or other navigation means so as to avoid escaping or getting lost.

In some embodiments, the robotic work tool is configured to determine that the robotic work tool is in the crossing zone by comparing the reception of the two (or more) boundaries 320A, 320B. If both boundaries are reliably received, as in that they are received at a signal level and/or quality where they can be determined correctly, the robotic work tool determines that it is in a (safe) crossing zone. For overlapping work areas, the whole overlap may thus be a crossing zone Z.

Figure 3A shows an example where the boundaries 320A, 320B are based on boundary wires. Figure 3B shows a similar example, but where the boundaries are based on other navigation techniques, such as based on signals from beacons 330'A, 330'B. It should be noted that even though figure 3B only shows one beacon (or reference station) for each work area, more may be present. As pointed out in the above, a beacon may be a UWB beacon (or other beacon) or a base station for use with a RTK system. In the example of figure 3B, the range of the first work areas beacon 330'A is indicated RA and the range of the second work areas beacon 330'B is indicated RB. To allow the robotic work tool 200 to cross from the first work area 305A to the second work area 305B, a crossing zone Z (or several) may be arranged in area(s) where signals are reliable received from both the first beacon(s) 330'A and the second beacon(s) 330'B, i.e. within range of both the first beacon(s) 330'A and the second beacon(s) 330'B. As shown in the example of figure 3B, the crossing zone Z is inside a work area, where no specified further transportation path is needed. As is also shown (as an alternative, which is not covered by the appended claims, or addition) in the example of figure 3B, the crossing zone Z maybe outside a work area, where a specified further transportation path may be needed for guiding the robotic work tool 200 inside the work area being crossed over in to. The transport path guiding a robotic work tool 200 into a work area, may in some embodiments simply be that the robotic work tool is aware of the boundary of the work are and navigates into it using any available navigation technique. The transport path guiding a robotic work tool 200 into a work area, may in some embodiments, be a path that is (as discussed above) known to be reliable.

Figure 3C shows an example similar to the examples of figures 3A and 3B, but in the example of figure 3C, the first boundary 320A is based on beacons 330'A sensed by the navigation sensor 290 and the second boundary 320B is based on a boundary wire sensed by the sensors 270. This example serves to show that a combination of boundaries is possible, and the domain mode may thus also include indications of which sensors to use for detecting a boundary.

Figure 3D shows a further example where two work areas 305A and 305B are not adjacent one another. In some such embodiments, each work area 305A, 305B has a crossing zone Z', Z" which are connected by a transport path TP. In such embodiments, as the robotic work tool 200 intends to cross from a first work area 305A to a second work area 305B, the robotic work tool 200 is configured to propel itself to the first crossing zone Z' (i.e. the crossing zone of the first work area 305A). As it is determined that the robotic work tool is in the first crossing zone, the robotic work tool travels along the travel path to the second crossing zone Z"(i.e. the crossing zone of the second work area 305B).

In some embodiments the robotic work tool 200 is configured to determine that the robotic work tool 200 is in a crossing zone based on comparing the current position of the robotic work tool 200 with a known location for the crossing zone Z.

In some embodiments the robotic work tool 200 is configured to determine that the robotic work tool 200 is in a crossing zone based on sensing surrounding signals such as the boundary 320A, 320B.

In some embodiments, the robotic work tool 200 is configured to switch from the first domain mode as it determines that the robotic work tool is in the first crossing zone. The robotic work tool 200 is configured to switch to the second operating mode and may navigate along the transport path using any available navigation technique. The second domain mode will allow the robotic work tool to enter the second work area, while not stop the robotic work tool 100 from leaving the first work area.

In some such embodiments, the robotic work tool 200 is configured to switch to a transport mode, where the robotic work tool is configured to navigate regardless of the boundaries 320A, 320B. This allows the robotic work tool to both exit and enter any work area. In such embodiments the robotic work tool 200 is configured to switch to the second domain mode as the second crossing zone is reached.

In the example of figure 3D, the robotic work tool travels along the robotic work tool based on the navigation sensor 290, receiving signals from the satellite 330 and/or form any of the beacons 330'A, 330'B.

This enables automated transport of a robotic work tool between two work areas, possibly even when the work areas are bounded by boundary wires.

In some embodiments, the robotic work tool is configured to deactivate the work tool 160 when travelling along a transport path.

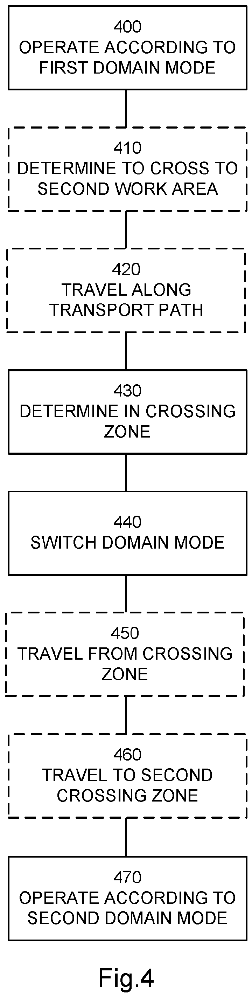

Figure 4 shows a flowchart for a general method according to herein. The method is for use in a robotic work tool as disclosed herein. The method comprises the robotic work tool 200 being in a first work area 305A and operating 400 in a first domain mode according to a first boundary 320A. The robotic work tool 200 determines 430 that the robotic work tool is in a crossing zone Z and in response thereto switches 440 domain mode and operates 470 in a second domain mode according to a second boundary 320B in a second work area 305B.

In some embodiments the robotic work tool 200 is configured to determine 410 that it is to cross from the first work area 305A to the second work area 305B and in response thereto travel 420 to the crossing zone Z, possibly along a transport path.

In some embodiments, such as when the crossing zone is not inside the second work area 305B, the robotic work tool 200 is configured to travel 450 from the crossing zone Z, possibly along a transport path, to the second work area 305B. In some embodiments, the robotic work tool 200 travels 460 along the transport path to a second crossing zone in the second work area 305B.

In some embodiments the transport path is realized through a guide wire that emits a magnetic field (when in use) that may be sensed by the robotic work tool 200.

In some embodiments the transport path is realized through a (series of) coordinates that the robotic work tool 200 may travel along using any available navigation technique capable of travelling along coordinates, for example using deduced reckoning, beacon navigation or satellite navigation.

## Claims

1. Robotic work tool system (300) comprising a first work area (305A) bounded by a first boundary (320A), a second work area (305B) bounded by a second boundary (320B), and a robotic work tool (200) comprising a controller, wherein
the robotic work tool system (300) further comprises a boundary wire (320) marking one or both of the first and the second boundary and the robotic work tool (200) further comprises a magnetic sensor (270), and/or
the robotic work tool system (300) further comprises a beacon (330) marking one or both of the first and the second boundary and the robotic work tool (200) further comprises a navigation sensor (290);
wherein the controller is configured to:
operate in a first domain mode in the first work area (305A) according to the first boundary (320A) and
operate in a second domain mode in the second work area (305B) according to the second boundary (320B),
wherein the controller is further configured to operate in a domain mode for one or both of the first or second work area according to the magnetic sensor sensing a magnetic field emitted from the boundary wire (320) and/or according to the navigation sensor sensing a signal emitted from the beacon (330), and wherein the robotic work tool system (300) is **characterized in that** the controller is further configured to allow the robotic work tool (200) to navigate to a crossing zone (Z) inside the first work area (305A) operating in the first domain mode according to the first boundary (320A), determine that the robotic work tool (200) is in the crossing zone (Z) and then switch from the first domain mode to the second domain mode and to leave the first work area (305A) operating based on the second domain mode and continue operating in the second work area (305B) according to the second boundary (320B).

2. The robotic work tool system (300) according to claim 1, wherein the controller is further configured to cause the robotic work tool (200) to travel along a transport path (TP) to the crossing zone (Z).

3. The robotic work tool system (300) according to claim 1 or 2, wherein the controller is further configured to cause the robotic work tool (200) to travel along a transport path (TP) from the crossing zone (Z) into the second work area (305B).

4. The robotic work tool system (300) according to claim 3, wherein the controller is further configured to cause the robotic work tool (200) to travel along the transport path (TP) from the crossing zone (Z') to a second crossing zone (Z") in the second work area (305B).

5. The robotic work tool system (300) according to any of claims 2 to 4, wherein the controller is further configured to operate in a transport mode while travelling along the transport path (TP).

6. The robotic work tool system (300) according to any preceding claim,
wherein the controller is further configured to determine that the robotic work tool (200) is in the crossing zone based on a position of the robotic work tool (200) and a known location of the crossing zone (Z).

7. The robotic work tool system (300) according to any preceding claim,
wherein the controller is further configured to determine that the robotic work tool (200) is in the crossing zone based on a sensing of the first boundary (320A) and/or the second boundary (320B).

8. The robotic work tool system (300) according to claim 1, wherein the crossing zone (Z) is in range of the beacon (330).

9. The robotic work tool system (300) according to any preceding claim,
wherein there is a first crossing zone (Z) in the first work area (305A) and a second crossing zone (Z) in the second work area (305B), wherein the first crossing zone (Z) in the first work area (305A) is connected to the second crossing zone (Z) in the second work area (305B) by a transport path (TP).

10. The robotic work tool system (300) according to claim 9, wherein the robotic work tool (200) further comprises a satellite signal navigation sensor (290) and wherein the controller is configured to travel along the transport path connecting the first crossing zone (Z) in the first work area (305A) and the second crossing zone (Z) in the second work area (305B) navigating based on satellite navigation.

11. The robotic work tool system (300) according to any previous claim,
wherein the robotic work tool is configured to ignore the second boundary (320B) when operating in the first domain mode.

12. The robotic work tool system (300) according to any previous claim,
wherein the robotic work tool is configured to ignore the first boundary (320A) when operating in the second domain mode.

13. The robotic work tool system (300) according to any previous claim,
wherein the robotic work tool is configured for operating in a work area comprising an uneven surface, where objects are of a similar appearance to the surface and/or overhanging obstacles.

14. The robotic work tool system (300) according to any previous claim,
wherein the robotic work tool is a robotic lawnmower.

15. A method for use in a robotic work tool system (300) comprising a first work area (305A) bounded by a first boundary (320A), a second work area (305B) bounded by a second boundary (320B), and a robotic work tool (200), wherein
the robotic work tool system (300) further comprises a boundary wire (320) marking one or both of the first and the second boundary and the robotic work tool (200) further comprises a magnetic sensor (270), and/or
the robotic work tool system (300) further comprises a beacon (330) marking one or both of the first and the second boundary, wherein the robotic work tool (200) further comprises a navigation sensor (290);
wherein the method comprises:
operating the robotic work tool (200) in a first domain mode in the first work area (305A) according to the first boundary (320A) and
operating the robotic work tool (200) in a second domain mode in the second work area (305B) according to the second boundary (320B),
wherein the method further comprises the robotic work tool (200)
operating in a domain mode for one or both of the first or second work area according to the magnetic sensor sensing a magnetic field emitted from the boundary wire (320) and/or according to the navigation sensor sensing a signal emitted from the beacon (330), and wherein the method is **characterized in that** the method further comprises
allowing the robotic work tool (200) to navigate to a crossing zone (Z) inside the first work area (305A) operating in the first domain mode according to the first boundary (320A),
determining that the robotic work tool (200) is in the crossing zone (Z) and then switching from the first domain mode to the second domain mode
operating in the first domain mode according to the first boundary (320A) and to leave the first work area (305A) operating based on the second domain mode and continue operating in the second work area (305B) according to the second boundary (320B).

## Patentansprüche

1. Roboterarbeitswerkzeugsystem (300), umfassend einen ersten Arbeitsbereich (305A), der durch eine erste Begrenzung (320A) begrenzt ist, einen zweiten Arbeitsbereich (305B), der durch eine zweite Begrenzung (320B) begrenzt ist, und ein Roboterarbeitswerkzeug (200), umfassend eine Steuerung, wobei
das Roboterarbeitswerkzeugsystem (300) ferner einen Begrenzungsdraht (320), der eine oder beide der ersten und der zweiten Begrenzung markiert, umfasst und das Roboterarbeitswerkzeug (200) ferner einen Magnetsensor (270) umfasst, und/oder
das Roboterarbeitswerkzeugsystem (300) ferner eine Bake (330), die eine oder beide der ersten und der zweiten Begrenzung markiert, umfasst und das Roboterarbeitswerkzeug (200) ferner einen Navigationssensor (290) umfasst;
wobei die Steuerung konfiguriert ist zum:
Inbetriebsein in einem ersten Domänenmodus in dem ersten Arbeitsbereich (305A) gemäß der ersten Begrenzung (320A) und
Inbetriebsein in einem zweiten Domänenmodus in dem zweiten Arbeitsbereich (305B) gemäß der zweiten Begrenzung (320B),
wobei die Steuerung ferner konfiguriert ist, um in einem Domänenmodus für einen oder beide des ersten oder des zweiten Arbeitsbereichs in Betrieb zu sein, gemäß eines Erfassens eines Magnetfelds, das von dem Begrenzungskabel (320) ausgesendet wird, durch den Magnetsensor und/oder gemäß des Erfassens eines Signals, das von der Bake (330) ausgesendet wird, durch den Navigationssensor, und wobei das Roboterarbeitswerkzeugsystem (300)
**dadurch gekennzeichnet ist, dass** die Steuerung ferner konfiguriert, um zu ermöglichen, dass das Roboterarbeitswerkzeug (200) zu einer Kreuzungszone (Z) innerhalb des ersten Arbeitsbereichs (305A) navigiert, wobei sie gemäß der ersten Begrenzung (320A) in dem ersten Domänenmodus in Betrieb ist, zu bestimmen, dass sich das Roboterarbeitswerkzeug (200) in der Kreuzungszone (Z) befindet, und dann von dem ersten Domänenmodus in den zweiten Domänenmodus zu wechseln und um den ersten Arbeitsbereich (305A) zu verlassen, wobei sie basierend auf dem zweiten Domänenmodus in Betrieb ist, und weiterhin gemäß der zweiten Begrenzung (320B) in dem zweiten Arbeitsbereich (305B) in Betrieb zu sein.

2. Roboterarbeitswerkzeugsystem (300) nach Anspruch 1, wobei die Steuerung ferner konfiguriert ist, um das Roboterarbeitswerkzeug (200) zu veranlassen, sich entlang eines Transportpfads (TP) zu der Kreuzungszone (Z) zu bewegen.

3. Roboterarbeitswerkzeugsystem (300) nach Anspruch 1 oder 2, wobei die Steuerung ferner konfiguriert ist, um das Roboterarbeitswerkzeug (200) zu veranlassen, sich entlang eines Transportpfads (TP) von der Kreuzungszone (Z) in den zweiten Arbeitsbereich (305B) hinein zu bewegen.

4. Roboterarbeitswerkzeugsystem (300) nach Anspruch 3, wobei die Steuerung ferner konfiguriert ist, um das Roboterarbeitswerkzeug (200) zu veranlassen, sich entlang des Transportpfads (TP) von der Kreuzungszone (Z') zu einer zweiten Kreuzungszone (Z") in dem zweiten Arbeitsbereich (305B) zu bewegen.

5. Roboterarbeitswerkzeugsystem (300) nach einem der Ansprüche 2 bis 4, wobei die Steuerung ferner konfiguriert ist, um während eines Bewegens entlang des Transportpfads (TP) in einem Transportmodus in Betrieb zu sein.

6. Roboterarbeitswerkzeugsystem (300) nach einem der vorstehenden Ansprüche, wobei die Steuerung ferner konfiguriert ist, um basierend auf einer Position des Roboterarbeitswerkzeugs (200) und einer bekannten Stelle der Kreuzungszone (Z) zu bestimmen, dass sich das Roboterarbeitswerkzeug (200) in der Kreuzungszone befindet.

7. Roboterarbeitswerkzeugsystem (300) nach einem der vorstehenden Ansprüche, wobei die Steuerung ferner konfiguriert ist, um basierend auf dem Erfassen der ersten Begrenzung (320A) und/oder der zweiten Begrenzung (320B) zu bestimmen, dass sich das Roboterarbeitswerkzeug (200) in der Kreuzungszone befindet.

8. Roboterarbeitswerkzeugsystem (300) nach Anspruch 1, wobei sich die Kreuzungszone (Z) in Reichweite der Bake (330) befindet.

9. Roboterarbeitswerkzeugsystem (300) nach einem der vorstehenden Ansprüche, wobei es eine erste Kreuzungszone (Z) in dem ersten Arbeitsbereich (305A) und eine zweite Kreuzungszone (Z) in dem zweiten Arbeitsbereich (305B) gibt, wobei die erste Kreuzungszone (Z) in dem ersten Arbeitsbereich (305A) durch einen Transportpfad (TP) mit der zweiten Kreuzungszone (Z) in dem zweiten Arbeitsbereich (305B) verbunden ist.

10. Roboterarbeitswerkzeugsystem (300) nach Anspruch 9, wobei das Roboterarbeitswerkzeug (200) ferner einen Satellitensignalnavigationssensor (290) umfasst und wobei die Steuerung konfiguriert ist, um sich entlang des Transportpfads zu bewegen, der die erste Kreuzungszone (Z) in dem ersten Arbeitsbereich (305A) und die zweite Kreuzungszone (Z) in dem zweiten Arbeitsbereich (305B) verbindet, wobei sie basierend auf einer Satellitennavigation navigiert.

11. Roboterarbeitswerkzeugsystem (300) nach einem der vorstehenden Ansprüche, wobei das Roboterarbeitswerkzeug konfiguriert ist, um die zweite Begrenzung (320B) zu ignorieren, wenn es in dem ersten Domänenmodus in Betrieb ist.

12. Roboterarbeitswerkzeugsystem (300) nach einem der vorstehenden Ansprüche, wobei das Roboterarbeitswerkzeug konfiguriert ist, um die erste Begrenzung (320A) zu ignorieren, wenn es in dem zweiten Domänenmodus in Betrieb ist.

13. Roboterarbeitswerkzeugsystem (300) nach einem der vorstehenden Ansprüche, wobei das Roboterarbeitswerkzeug für das Inbetriebsein in einem Arbeitsbereich konfiguriert ist, umfassend eine unebene Oberfläche, wo Objekte ein ähnliches Aussehen wie die Oberfläche haben und/oder überhängende Hindernisse sind.

14. Roboterarbeitswerkzeugsystem (300) nach einem der vorstehenden Ansprüche, wobei das Roboterarbeitswerkzeug ein Roboterrasenmäher ist.

15. Verfahren zur Verwendung in einem Roboterarbeitswerkzeugsystem (300), umfassend einen ersten Arbeitsbereich (305A), der durch eine erste Begrenzung (320A) begrenzt ist, einen zweiten Arbeitsbereich (305B), der durch eine zweite Begrenzung (320B) begrenzt ist, und ein Roboterarbeitswerkzeug (200), wobei
das Roboterarbeitswerkzeugsystem (300) ferner einen Begrenzungsdraht (320), der eine oder beide der ersten und der zweiten Begrenzung markiert, umfasst und das Roboterarbeitswerkzeug (200) ferner einen Magnetsensor (270) umfasst, und/oder
das Roboterarbeitswerkzeugsystem (300) ferner eine Bake (330), die eine oder beide der ersten und der zweiten Begrenzung markiert, umfasst, wobei das Roboterarbeitswerkzeug (200) ferner einen Navigationssensor (290) umfasst;
wobei das Verfahren umfasst:
Betreiben des Roboterarbeitswerkzeugs (200) in einem ersten Domänenmodus in dem ersten Arbeitsbereich (305A) gemäß der ersten Begrenzung (320A) und
Betreiben des Roboterarbeitswerkzeugs (200) in einem zweiten Domänenmodus in dem zweiten Arbeitsbereich (305B) gemäß der zweiten Begrenzung (320B),
wobei das Verfahren ferner das Inbetriebsein des Roboterarbeitswerkzeugs (200) in einem Domänenmodus für einen oder beide des ersten oder des zweiten Arbeitsbereichs umfasst, gemäß des Erfassens eines Magnetfelds, das von dem Begrenzungsdraht (320) ausgesendet wird, durch den Magnetsensor und/oder gemäß des Erfassens eines Signals, das von der Bake (330) ausgesendet wird, durch den Navigationssensor, und wobei das Verfahren
**dadurch gekennzeichnet ist, dass** das Verfahren ferner umfasst
Ermöglichen, dass das Roboterarbeitswerkzeug (200) zu einer Kreuzungszone (Z) innerhalb des ersten Arbeitsbereichs (305A) navigiert, wobei es in dem ersten Domänenmodus gemäß der ersten Begrenzung (320A) in Betrieb ist,
Bestimmen, dass sich das Roboterarbeitswerkzeug (200) in der Kreuzungszone (Z) befindet, und dann Wechseln von dem ersten Domänenmodus in den zweiten Domänenmodus,
Inbetriebsein in dem ersten Domänenmodus gemäß der ersten Begrenzung (320A) und Verlassen des ersten Arbeitsbereichs (305A), wobei es basierend auf dem zweiten Domänenmodus in Betrieb ist, und weiterhin Inbetriebsein in dem zweiten Arbeitsbereich (305B) gemäß der zweiten Begrenzung (320B).

## Revendications

1. Système d'outil de travail robotisé (300) comprenant une première région de travail (305A) délimitée par une première délimitation (320A), une seconde région de travail (305B) délimitée par une seconde délimitation (320B), et un outil de travail robotisé (200) comprenant un dispositif de commande, dans lequel
le système d'outil de travail robotisé (300) comprend en outre un fil de délimitation (320) marquant une ou les deux des première et seconde délimitations, et l'outil de travail robotisé (200) comprend en outre un capteur magnétique (270), et/ou
le système d'outil de travail robotisé (300) comprend en outre une balise (330) marquant une ou les deux des première et seconde délimitations, et l'outil de travail robotisé (200) comprend en outre un capteur de navigation (290) ;
dans lequel le dispositif de commande est configuré pour :
fonctionner dans un premier mode de domaine dans la première région de travail (305A) selon la première délimitation (320A) et
fonctionner dans un second mode de domaine dans la seconde région de travail (305B) selon la seconde délimitation (320B),
dans lequel le dispositif de commande est en outre configuré pour fonctionner dans un mode de domaine pour une ou les deux des première et seconde régions de travail selon la détection par le capteur magnétique d'un champ magnétique émis par le fil de délimitation (320) et/ou selon la détection par le capteur de navigation d'un signal émis par la balise (330), et dans lequel le système d'outil de travail robotisé (300) est **caractérisé en ce que** le dispositif de commande est en outre configuré pour permettre à l'outil de travail robotisé (200) de naviguer vers une zone de franchissement (Z) à l'intérieur de la première région de travail (305A) fonctionnant dans le premier mode de domaine selon la première délimitation (320A), déterminer que l'outil de travail robotisé (200) se trouve dans la zone de franchissement (Z), puis passer du premier mode de domaine au second mode de domaine et quitter la première région de travail (305A) fonctionnant sur la base du second mode de domaine et continuer à fonctionner dans la seconde région de travail (305B) selon la seconde délimitation (320B).

2. Système d'outil de travail robotisé (300) selon la revendication 1, dans lequel le dispositif de commande est en outre configuré pour amener l'outil de travail robotisé (200) à se déplacer le long d'un chemin de transport (TP) vers la zone de franchissement (Z).

3. Système d'outil de travail robotisé (300) selon la revendication 1 ou 2, dans lequel le dispositif de commande est en outre configuré pour amener l'outil de travail robotisé (200) à se déplacer le long d'un chemin de transport (TP) de la zone de franchissement (Z) à la seconde région de travail (305B).

4. Système d'outil de travail robotisé (300) selon la revendication 3, dans lequel le dispositif de commande est en outre configuré pour amener l'outil de travail robotisé (200) à se déplacer le long du chemin de transport (TP) de la zone de franchissement (Z') à une seconde zone de franchissement (Z") dans la seconde région de travail (305B).

5. Système d'outil de travail robotisé (300) selon l'une quelconque des revendications 2 à 4, dans lequel le dispositif de commande est en outre configuré pour fonctionner en mode transport tout en se déplaçant le long du chemin de transport (TP).

6. Système d'outil de travail robotisé (300) selon l'une quelconque revendication précédente, dans lequel le dispositif de commande est en outre configuré pour déterminer que l'outil de travail robotisé (200) se trouve dans la zone de franchissement sur la base d'une position de l'outil de travail robotisé (200) et d'un emplacement connu de la zone de franchissement (Z).

7. Système d'outil de travail robotisé (300) selon l'une quelconque revendication précédente, dans lequel le dispositif de commande est en outre configuré pour déterminer que l'outil de travail robotisé (200) se trouve dans la zone de franchissement sur la base d'une détection de la première délimitation (320A) et/ou de la seconde délimitation (320B).

8. Système d'outil de travail robotisé (300) selon la revendication 1, dans lequel la zone de franchissement (Z) est à portée de la balise (330).

9. Système d'outil de travail robotisé (300) selon l'une quelconque revendication précédente, dans lequel il existe une première zone de franchissement (Z) dans la première région de travail (305A) et une seconde zone de franchissement (Z) dans la seconde région de travail (305B), dans lequel la première zone de franchissement (Z) dans la première région de travail (305A) est reliée à la seconde zone de franchissement (Z) dans la seconde région de travail (305B) par un chemin de transport (TP).

10. Système d'outil de travail robotisé (300) selon la revendication 9, dans lequel l'outil de travail robotisé (200) comprend en outre un capteur de navigation par signal satellite (290) et dans lequel le dispositif de commande est configuré pour se déplacer le long du chemin de transport reliant la première zone de franchissement (Z) dans la première région de travail (305A) et la seconde zone de franchissement (Z) dans la seconde région de travail (305B) en naviguant sur la base de la navigation par satellite.

11. Système d'outil de travail robotisé (300) selon l'une quelconque revendication précédente, dans lequel l'outil de travail robotisé est configuré pour ignorer la seconde délimitation (320B) lorsqu'il fonctionne dans le premier mode de domaine.

12. Système d'outil de travail robotisé (300) selon l'une quelconque revendication précédente, dans lequel l'outil de travail robotisé est configuré pour ignorer la première délimitation (320A) lorsqu'il fonctionne dans le second mode de domaine.

13. Système d'outil de travail robotisé (300) selon l'une quelconque revendication précédente, dans lequel l'outil de travail robotisé est configuré pour fonctionner dans une région de travail comprenant une surface irrégulière, où des objets ont un aspect similaire à la surface et/ou des obstacles en surplomb.

14. Système d'outil de travail robotisé (300) selon l'une quelconque revendication précédente, dans lequel l'outil de travail robotisé est une tondeuse à gazon robotisée.

15. Procédé destiné à être utilisé dans un système d'outil de travail robotisé (300) comprenant une première région de travail (305A) délimitée par une première délimitation (320A), une seconde région de travail (305B) délimitée par une seconde délimitation (320B), et un outil de travail robotisé (200), dans lequel
le système d'outil de travail robotisé (300) comprend en outre un fil de délimitation (320) marquant une ou les deux des première et seconde délimitations et l'outil de travail robotisé (200) comprend en outre un capteur magnétique (270), et/ou
le système d'outil de travail robotisé (300) comprend en outre une balise (330) marquant une ou les deux des première et seconde délimitations, dans lequel l'outil de travail robotisé (200) comprend en outre un capteur de navigation (290) ;
dans lequel le procédé comprend :
le fonctionnement de l'outil de travail robotisé (200) dans un premier mode de domaine dans la première région de travail (305A) selon la première délimitation (320A) et
le fonctionnement de l'outil de travail robotisé (200) dans un second mode de domaine dans la seconde région de travail (305B) selon la seconde délimitation (320B),
dans lequel le procédé comprend en outre le fonctionnement de l'outil de travail robotisé (200) dans un mode de domaine pour une ou les deux des première ou seconde régions de travail selon la détection par le capteur magnétique d'un champ magnétique émis par le fil de délimitation (320) et/ou selon la détection par le capteur de navigation d'un signal émis par la balise (330), et dans lequel le procédé est **caractérisé en ce qu'**il comprend en outre
le fait de permettre à l'outil de travail robotisé (200) de naviguer vers une zone de franchissement (Z) à l'intérieur de la première région de travail (305A) fonctionnant dans le premier mode de domaine selon la première délimitation (320A),
le fait de déterminer que l'outil de travail robotisé (200) se trouve dans la zone de franchissement (Z), puis le passage du premier mode de domaine au second mode de domaine
le fonctionnement dans le premier mode de domaine selon la première délimitation (320A) et la sortie de la première région de travail (305A) sur la base du second mode de domaine et la poursuite du fonctionnement dans la seconde région de travail (305B) selon la seconde délimitation (320B).
